# EUROPÄISCHE PATENTANMELDUNG

(11) **EP 1 104 779 A2**
(43) Veröffentlichungstag der Anmeldung: **06.06.2001**
(21) Anmeldenummer: 00125198.2
(22) Anmeldetag: 18.11.2000
(51) Int. Cl.: C08J 9/00

(54) **Verwendung von Siliconpolyether-Copolymeren bei der Herstellung von Polyurethan-Kaltschäumen**

(30) Priorität: 01.12.1999 DE 19957747
(71) Anmelder: Goldschmidt AG, 45127 Essen (DE)
(72) Erfinder: Burkhart, Georg, Dr., 45239 Essen (DE); Feldmann-Krane, Georg, Dr., 45472 Mülheim (DE); Fleute-Schlachter, Ingo, Dr., 45277 Essen (DE); Weier, Andreas, Dr., 45289 Essen (DE)

(57) **Zusammenfassung**

Die Erfindung betrifft die Verwendung von Siliconpolyether-Copolymeren der allgemeinen Formel I 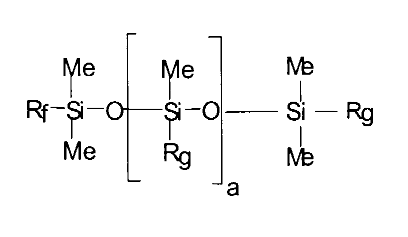 als oberflächenaktive Substanzen bei der Herstellung von Polyurethanschäumen.

## Beschreibung

Die nach dem Stand der Technik bei der Herstellung von Polyurethanschäumen angewandten Prozesse werden nach einer Reihe von Typen unterschieden. Diese Unterscheidungen können sowohl die verwendeten Chemikalien als auch die verwendeten Produktionsmaschinen betreffen. So wird z. B. zwischen einer diskontinuierlichen Fertigung in Kisten oder Formen und einer kontinuierlichen Fertigung auf verschiedenen Typen von Verschäumungsmaschinen unterschieden. Auch bezogen auf die verwendeten Rohstoffe und damit hergestellten Schaumtypen sind deutlich verschiedene Gruppen von Polyurethanschäumen zu unterscheiden.

So sind z. B. Hartschäume schon von ihrem Eigenschaftsprofil und ihrer Verwendung deutlich verschieden von Weichschäumen, aber selbst innerhalb der Gruppe der Weichschäume wird zwischen Heißschaum und Kaltschaum unterschieden. Hierbei bezeichnet man als Kaltschaum einen sogenannten hochelastischen Polyurethanschaum, der durch Reaktion von mindestens einem difunktionellen Polyisocyanat, z. B. Toluol-Diisocyanat oder Diphenylmethandiisocyanat, mit mindestens einem Polyol entsteht, welches mindestens zwei Hydroxylgruppen je Molekül aufweist und im Mittel einen hohen Anteil an primären Hydroxylgruppen hat. Bedingt durch den hohen Gehalt an primären OH-Gruppen weisen die Polyole in bezug auf die Isocyanate eine hohe Reaktivität auf.

Im Gegensatz zu konventionellen Polyurethanschäumen, den sogenannten Heißschäumen, wird deshalb bereits beim Aufschäumen eine hohe Vernetzungsdichte erzielt. Dies hat den Vorteil, daß beim Aushärten auf die Zufuhr von größeren Mengen Energie meist verzichtet werden kann und daß die Zeit für die Aushärtung der Schäume insgesamt verkürzt wird. Nachteilig ist aber, daß die Tendenz zur Bildung geschlossenzelliger Schäume erhöht und damit auch der Verarbeitungsspielraum eingeengt wird. Unter Verarbeitungsspielraum sind dabei die Toleranzgrenzen zu verstehen, innerhalb derer von einer Rezeptur abgewichen werden kann, ohne daß die Ausbildung stabiler und gleichzeitig ausreichend offenzelliger bzw. leicht aufdrückbarer Schäume gefährdet wird.

Daher sind in den Herstellungsverfahren für Polyurethanschäume, die sich nicht auf weniger reaktive Rohstoffe wie beim Heiß-Weichblockschaum beziehen, Produkte von weniger ausgeprägt stabilisierendem Charakter gefordert. Dabei ist besonders die Eigenschaft der Zellregulierung in den Randzonen der Schäume ein wichtiges Qualitätskriterium. Das gilt ganz besonders für Kaltformschäume, aber auch ansonsten ist eine gleichartige Zellstruktur über den gesamten Polyurethanschaumkörper erstrebenswert. Obwohl heute selbst im Bereich des Kaltschaumes besonders bei der Verwendung von hoch feststoffhaltigen Polyolen in Kombination mit Toluoldiisocyanatmischungen als Reaktivkomponente eine gewisse Stabilisierung notwendig ist, so sind doch z. B. Heißweichschaumstabilisatoren nach dem Stand der Technik nicht als Schaumstabilisatoren für derartige Prozesse geeignet.

Statt dessen werden normalerweise deutlich kürzere und weniger stabilisierende Coplymere als Schaumstabilisatoren bzw. Zellregulierer eingesetzt. Im Normalfall handelt es sich dabei entweder um sehr kurze, unmodifizierte Siloxane oder um im Verhältnis zum Siloxan wenig modifizierte Produkte mit seitenständigen niedermolekularen Polyethersubstituenten oder anderen wenig polaren Gruppen.

Dieser Stand der Technik spiegelt sich in einer Vielzahl von unterschiedlichen Patenten auf dem Polyurethangebiet wider. So ist z. B. in der GB-A-907 971 schon im Jahre 1960 beschrieben worden, daß hochmolekulare Silikonöle eine übermäßig große Zahl geschlossener Zellen im Schaum hervorrufen. Daher werden in der angegebenen Patentschrift niedermolekulare Polydialkylsiloxane mit Viskositäten von 2 bis 9 Centistokes bei 25 °C vorgeschlagen. Diese garantieren dann ein verbessertes Verarbeitungsspiel (siehe Spalte 2, Zeilen 55 ff.). Generell sind im Bereich der kalthärtenden Polyurethanschaumstoffe eine Vielzahl von niedermolekularen Polydimethylsiloxanen oder mit wenig polaren Gruppen modifizierte kurze Polydimethylsiloxane vorgeschlagen worden und werden nach dem heutigen Stand der Technik auch eingesetzt.

So werden z. B. in der DE-A-36 26 297 Siloxane mit seitenständigen Chlorpropylresten als Kaltschaumstabilisator beschrieben. Auch in EP-A-0 041 216 werden Siloxane mit durchweg kurzer Kettenlänge eingesetzt, die zudem noch mit wenig polaren und niedermolekularen Substituenten, in diesem Fall Alkoxygruppen mit 1 bis 7 C-Atomen, substituiert sind. Selbst in den Fällen, in denen bisher konventionelle Silikonpolyether höheren Molekulargewichtes im Kaltschaum eingesetzt wurden, wie z. B. in EP-A-0 043 110, wurden diese Substanzen grundsätzlich im Unterschuß in Mischung mit typischen Kaltschaumstabilisatoren verwendet. In EP-A-0 043 110 z. B. besteht der überwiegende Teil, mindestens 65 %, der verwendeten Stabilisatorzubereitung aus typischen Kaltschaumstrukturen mit sehr kurzen Siloxanen, Kettenlänge ≤10, mit Cyanoalkyl- oder endverkappten Polyethyloxideinheiten geringen Molekulargewichtes.

Eine Ausnahme zu den üblichen, verzweigten Copolymerstrukturen stellen lineare Siloxanpolyoxyalkylenblockcopolymere, wie z. B. in US-A-3 836 560 beschrieben, dar. Dabei handelt es sich um hochmolekulare Polymerisationsprodukte von endständig funktionalisierten Siloxanketten mit endständig bifunktionellen Polyethern, so daß (AB)ₙ Blockcopolymere mit Molekulargewichten oberhalb 30000 entstehen. Analoge Produkte werden unter anderem auch in US-A-4 150 048, US-A-4 242 466 oder der japanischen Patentanmeldung H 7-90102 offengelegt. Die Gemeinsamkeit all dieser unterschiedlichen Strukturen zur Stabilisierung und Zellregulierung von Polyurethanschäumen ist die Tatsache, daß diese Moleküle auf Grund der statistischen Herstellungsverfahren bei der Siloxanäquilibrierung und eventuellen Copolymerisation quasi "statistisch symmetrische" Strukturen darstellen. Zumindest ist in diesen Fällen kein erkennbarer Versuch unternommen worden, die eingesetzten Siloxanstrukturen unsymmetrisch zu substituieren und z. B. durch den Aufbau einer linearen AB-Copolymerstruktur die Eigenschaften von modifizierten Siloxanen beim Einsatz in der Polyurethanverschäumung zu optimieren.

Überraschenderweise wurde nun gefunden, daß die Verwendung von linearen endständig funktionalisierten Siloxanen vom AB-Typ allein oder in Kombination mit anderen siliconhaltigen oder nicht-siliconhaltigen oberflächenaktiven Substanzen vorteilhafte Stabilisierung bzw. Zellregulierung bei der Herstellung von Polyurethanschäumen erlaubt.

Gegenstand vorliegender Erfindung ist deshalb die Verwendung von Siliconpolyethercopolymeren der allgemeinen Formel 1 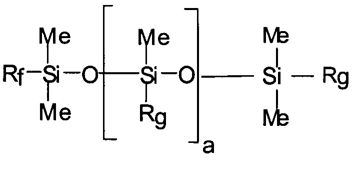 wobei
R_{f} einen Polyetherrest der durchschnittlichen Formel

   - (Y)_{c}[O(CₓH₂ₓO)ₚZ]_{w}

   bezeichnet, mit der Bedeutung
   c = 0 oder 1,
   x = 2 bis 4, wobei auch Mischungen der entsprechenden Monomeren verwendet werden können,
   p ≥ 0,
   w = 1 bis 4,
   Z = ein Wasserstoffrest oder ein einwertiger organischer Rest,
   Y = ein w+1-bindiger Kohlenwasserstoffrest, der auch verzweigt sein kann,
R_{g} ein Alkylrest mit 1 bis 10 Kohlenstoffatomen oder ein gegebenenfalls substituierter Arylrest ist,
wobei
a eine Zahl von 0 bis 20, bevorzugt 2 bis 8, ist,
mit der Maßgabe, daß nicht c und p zur gleichen Zeit 0 sein können, als oberflächenaktive Substanzen bei der Herstellung von Polyurethanschäumen.

Die erfindungsgemäßen AB-Siliconcopolymeren können auch in Kombinationen untereinander oder mit anderen organischen oder siliconhaltigen oberflächenaktiven Substanzen eingesetzt werden.

Der Wert von a ist, wie dem Fachmann geläufig ist, als durchschnittlicher Wert im Polymermolekül zu verstehen, da die erfindungsgemäß zu verwendenden Siliconpolyether-Copolymeren im Regelfall in Form von äquilibrierten Gemischen vorliegen.

Aus dem gleichen Grunde werden auch bei entsprechender Herstellung durch Äquilibrierung von Siloxanen üblicherweise statistische Gemische von mono-, di- und unfunktionalisierten Siloxanen erhalten. Selbst im Falle des Einsatzes eines derartigen statistischen Gemisches wurde gefunden, daß die Effekte bei der Herstellung von Polyurethanschäumen deutlich über das Eigenschaftsprofil der üblicherweise verwendeten Stabilisatoren herausragen. Falls gewünscht, kann auch nach literaturbekannten Methoden wie z. B. durch die anionische Ringöffnung von Hexamethylcyclotrisiloxan ein Produkt mit hohem Gehalt an AB-Polymeren erhalten werden. Möglich ist offensichtlich auch eine nachfolgende Trennung eines durch Äquilibrierung erhaltenen statistischen Gemisches sowohl auf der Stufe des Siloxans als auch auf der Stufe des Copolymeren.

Die Reste Rg sind Alkylreste mit 1 bis 10 Kohlenstoffatomen, wie Methyl-, Ethyl-, Propyl-, Butyl- oder Hexylreste oder Arylreste, wobei für die letztgenannten Phenylreste bevorzugt sind. Herstellungs- und preisbedingt sind Methylreste bevorzugt. Besonders bevorzugt sind solche Siliconpolyether-Copolymeren, bei denen alle Reste Rg Methylreste sind.

Es können sowohl ein als auch mehrere Silicone oder Siliconpolyether-Copolymeren in Kombination miteinander verwendet werden, dabei sind die erfindungsgemäßen Produkte mit mehr als 20 %, bevorzugt mit mehr als 40 %, besonders bevorzugt mit mehr als 90 % Anteil der silikonhaltigen Substanzen des gesamten Kaltschaumstabilisators vorhanden. Dabei werden die den mit diesem Fachgebiet vertrauten Personen hinlänglich bekannten, bei der Herstellung der Siloxanketten durch z. B. saure Äquilibrierung nach literaturbekannten Verfahren aufgrund der thermodynamischen Gegebenheiten immer in geringen Mengen entstehenden kurzkettigen Siloxane bzw. Siloxanringe nicht gesondert berücksichtigt.

Die Polyether können Ethylenoxid, Propylenoxid und bis zu 20 % Butylenoxid oder höhere Alkylenoxide enthalten und als Endgruppen sowohl Hydroxylgruppen als auch C_{₁}- bis C₆-Alkylether- oder Estergruppen enthalten. Üblicherweise werden je nach Kettenlänge des Siloxanteiles Polyethergruppen im Molekulargewichtsbereich von 100 bis 4000, bevorzugterweise von 100 bis 1500, besonders bevorzugt von 200 bis 1000 eingesetzt. Hergestellt werden die Verbindungen, wie in der Literatur für Siliconpolyether-Copolymere beschrieben, z. B. durch Hydrosilylierung eines doppelbindungshaltigen Polyethers, gegebenenfalls im Gemisch mit anderen doppelbindungshaltigen Polyethern, falls Mischungen verschiedener erfindungsgemäßer Stabilisatoren erhalten werden sollen. Eine andere Möglichkeit der Herstellung der entsprechenden Si-OC-verknüpften Strukturen ist die literaturbekannte Eisen (III) chlorid-katalysierte Äquilibrierung z. B. von Chlortrimethylsilan mit cyclischen Polydimethylsiloxanen. Die anschließende Umsetzung der erhaltenen Si-Cl-funktionalisierten Polydimethylsiloxane mit hydroxylgruppenhaltigen Polyoxyalkylencpolymeren unter basischen Bedingungen und nachfolgende Filtration der entstehenden Aminsalze und ggf. Abdestillation verwendeten Lösungsmittels ergibt das gewünschte Blockcopolymere.

### Beispiele

Die eingesetzten Siloxane besitzen folgende durchschnittliche Formel:

(CH₃) ₃SiO- [ (CH₃) ₂SiO-] ₙSi (CH₃) ₂H = MDₙM^{H}

Die Synthese dieser Siloxane erfolgt nach bekannten Verfahren, z. B. durch saure Äquilibrierung von Gemischen aus Hexamethyldisiloxan, Octamethylcyclotetrasiloxan und α,ω-Dihydrogenpolydimethylsiloxan (z. B. M^{H}D₆M^{H}). Dem Fachmann ist klar, daß sich dabei ein Siloxangemisch mit statistischer Verteilung bildet, das im Durchschnitt aus 2 Mol MDₙM^{H} und je 1 Mol M^{H}DₙM^{H} und MDₙM besteht.

### Beispiel 1

In einem mit Rührer, Thermometer, Gaseinleitung und Rückflußkühler versehenen Kolben werden 331,5 g (0,65 Mol) Polyether mit der durchschnittlichen Zusammensetzung CH₂=CH-CH₂O-(C₂H₄O-)₆(C₃H₆O-)₃CH₃ vorgelegt. Durch die Apparatur wird Stickstoff geleitet und der Polyether auf 90°C erwärmt. Nun wird der Ansatz mit 16 mg cis-[H₂PtCl₆] versetzt und anschließend werden unter intensivem Rühren 185,4 g (0,5 Mol) Siloxan mit der durchschnittlichen Zusammensetzung MD₃M^{H} in 30 Minuten zugetropft. Es ist eine leichte Exothermie zu beobachten. Nach Zutropfende wird der Ansatz klar. Man läßt noch 2 Stunden nachreagieren. Der SiH-Umsatz beträgt 99,5 % (bestimmt über Wasserstoffabspaltung mit n-Butanol in alkalischem Medium). Man erhält ein klares, gelbliches Produkt.

Zur Entfernung der flüchtigen, nichtmodifizierten Siloxananteile vom Typ MDₙM ist das erhaltene Produkt bei 150°C und 0,5 mbar behandelt worden. Das erhaltene Produkt wird als Stabilisator 1 bezeichnet.

### Beispiel 2

Unter den Bedingungen von Beispiel 1 werden 322,4 g (0,65 Mol) Polyether mit der durchschnittlichen Zusammensetzung CH₂=CH-CH₂O-(C₂H₄O-)₆(C₃H₆O-)₃H und 259,6 g (0,5 Mol) Siloxan mit der durchschnittlichen Zusammensetzung MD₅M^{H} in Gegenwart von 18 mg cis-[H₂PtCl₆] umgesetzt. Der SiH-Umsatz beträgt 98,9 %. Das erhaltene Produkt wird als Stabilisator 2 bezeichnet.

### Beispiel 3

Unter den Bedingungen von Beispiel 1 werden 421,2 g (0,39 Mol) Polyether mit der durchschnittlichen Zusammensetzung CH₂=CH-CH₂O-(C₂H₄O-)₁₄(C₃H₆O-)₇H und 133,5 g (0,3 Mol) Siloxan mit der durchschnittlichen Zusammensetzung MD₄M^{H} in Gegenwart von 17 mg cis-[H₂PtCl₆] umgesetzt. Der SiH-Umsatz beträgt 100 %, das Produkt zeigt eine leichte Trübung. Das erhaltene Produkt wird als Stabilisator 3 bezeichnet.

### Beispiel 4

Unter den Bedingungen von Beispiel 1 werden 380,9 g (0,65 Mol) Polyether mit der durchschnittlichen Zusammensetzung CH₂=CH-CH₂O-(C₂H₄O-)₁₂H und 222,5 g (0,5 Mol) Siloxan mit der durchschnittlichen Zusammensetzung MD₄M^{H} in Gegenwart von 18 mg cis-[H₂PtCl₆] umgesetzt. Der SiH-Umsatz beträgt 100 %. Das erhaltene Produkt wird als Stabilisator 4 bezeichnet.

### Beispiel 5 (nicht erfindungsgemäß)

Unter den Bedingungen von Beispiel 1 werden 34,9 g (0,22 Mol) Polyether mit der durchschnittlichen Zusammensetzung CH₂=CH-CH₂O-(C₃H₆O-)₂H, 111,1 g (0,22 Mol) Polyether mit der durchschnittlichen Zusammensetzung

CH₂=CH-CH₂O- (C₂H₄O-)₆(C₃H₆O-)₃H

und 100 g (0,16 Mol) Siloxan mit der durchschnittlichen Zusammensetzung M^{H}D_{6,5}M^{H} in Gegenwart von 3,8 mg cis-[H₂PtCl₆] umgesetzt. Der SiH-Umsatz beträgt 100 %. Das erhaltene Produkt wird als Vergleich 1 bezeichnet.

Bei der Verwendung zur Herstellung von Polyurethan-Kaltschäumen (sogenannten High Resilience-Schäumen) in Formen haben diese erfindungsgemäßen Verbindungen die Eigenschaft, die Formschäume ausreichend zu stabilisieren und die Zellstruktur bis in die Randbereiche zu regulieren. Die erhaltenen Schaumkissen sind vergleichsweise leicht aufdrückbar.

Zur Austestung der erfindungsgemäß verwendeten Substanzen werden die Verbindungen in den angegebenen Konzentrationen in der bekannten Weise in üblichen Formulierungen verschäumt, die z. B. zur Herstellung von Autositzen oder Möbelkissen verwendet werden.

Für die anwendungstechnischen Prüfungen werden folgende Formulierungen verwendet:

| | Formulierung 1 | Formulierung 2 |
|---|---|---|
| Polyol 1 | 100 Teile | 50 Teile |
| | | |
| Polyol 2 | | 50 Teile |
| | | |
| Wasser | 3,0 Teile | 4,0 Teile |
| | | |
| Diethanolamin | 2,0 Teile | 1,2 Teile |
| | | |
| Tegoamin 33⁽¹⁾ | 0,4 Teile | 0,4 Teile |
| | | |
| Tegoamin BDE⁽²⁾ | 0,05 Teile | 0,05 Teile |
| | | |
| T 80 ⁽³⁾ | 37,8 Teile | 51,1 Teile |
| | | |
| Stabilisator | variabel | variabel |
| Polyol 1 handelsübliches Polyetherpolyol MW 4800 | | |
| Polyol 2 handelsübliches Copolymer-Polyol, enthält 40 % Styrol-Acrylnitril-Copolymer | | |

| | | |
|---|---|---|
| ⁽¹⁾ Tegoamin 33 handelsüblicher Aminkatalysator der Goldschmidt AG | | |
| ⁽²⁾ Tegoamin BDE handelsüblicher Aminkatalysator der Goldschmidt AG | | |
| ⁽³⁾ T 80 handelsübliches Toluylendiisocyanat | | |

### Durchführung der Versuche:

Die in Formulierung 1 genannten Komponenten mit Ausnahme des T 80, jedoch inklusive des erfindungsgemäßen Stabilisators 1, werden in einem 2-Liter-Becher mit einem Flügelrührer 1 Minute bei 1000 UpM gemischt. Nach Zusetzen des T 80 wird für weitere 7 Sekunden bei 2500 UpM gemischt. Die Reaktionsmischung wird in eine beheizte Aluminium-Form (40x40x10cm) gegeben. Nach exakt 6 Minuten wird entformt und die Aufdrückkraft gemäß Beschreibung gemessen.

Die Beurteilung der mit den erfindungsgemäßen Substanzen hergestellten Schäume geschieht dabei nach folgenden Kriterien:
1) Zellstruktur: Der typische Kaltschaum besitzt eine unregelmäßige Zellstruktur, aus der heraus er unter anderem seine guten Elastizitätseigenschaften bezieht. Es wird daher grundsätzlich die unregelmäßige Zellstruktur erwartet.
2) Randzonenregulierung: Das Schaumkissen soll vom Kern bis zur Haut eine durchgehend gute Zellstruktur aufweisen. Eine deutlich vergröberte Randzone wird als Fehler angesehen und ist zu vermeiden.
   Die Bewertung reicht von gut über leicht gestört, stark gestört bis wirkungslos.
3) Aufdrückbarkeit: Die Aufdrückbarkeit des Kissens ist ein Maß für die gute Entformbarkeit. Schaumkissen, die nur durch Anwendung einer großen Kraft aufgedrückt werden können, neigen bei der Entformung dazu, eingerissen und zerstört zu werden.

Zur Bestimmung der zum Aufdrücken benötigten Kraft wird an den frisch entformten Schäumen, ohne daß sie zunächst gedrückt werden, mittels einer Druckprüfmaschine die Eindruckhärte (ILD) bei einer Stauchtiefe von 50 % gemessen.

| Formulierung 1 | | | | | |
|---|---|---|---|---|---|
| | Konzentration/Teile | Zellstruktur | Zahl der Zellen/cm | Aussehen der Randzonen | Aufdrückkraft (N) |
| | | | | | |
| Stabilisator 1 | 0,1 | unregelmäßig | 10 | gut | 1291 |
| Stabilisator 2 | 0,05 | unregelmäßig | 10 | gut | 1470 |
| Stabilisator 3 | 0,5 | unregelmäßig | 13 | gut | 1638 |
| Stabilisator 4 | 0,05 | unregelmäßig | 9 | gut | 1431 |
| Vergleich 1 | 0,1 | unregelmäßig | 10-11 | gut | 1741 |
| Vergleich 1 | 0,05 | unregelmäßig | 10 | leicht gestört | 1565 |

Wie die Tabelle mit den Ergebnissen für Formulierung 1 zeigt, wird in allen Fällen ein Schaumkissen erhalten, welches eine für den Kaltschaum gewünschte unregelmäßige Zellstruktur aufweist. Die erfindungsgemäßen Substanzen erlauben eine fehlerfreie Durchregulierung der empfindlichen Randzonen. Überraschenderweise ist bei den erfindungsgemäßen Stabilisatoren die zum Aufdrücken des Schaums benötigte Kraft teilweise als ausgesprochen niedrig anzusehen (z. B. in bezug auf die nicht erfindungsgemäße Vergleichssubstanz 1, besonders in Berücksichtigung der hohen möglichen Einsatzkonzentration z. B. bei Stabilisator 3). Hohe Aufdrückkräfte können bei der industriellen Produktion Probleme bei der Entformung nach sich ziehen und sind insofern unerwünscht.

Die Verschäumungsergebnisse in Formulierung 2 sind in der nachfolgenden Tabelle beschrieben.

| Formulierung 2 | | | | | |
|---|---|---|---|---|---|
| | Konzentration/Teile | Zellstruktur | Zahl der Zellen/cm | Aussehen der Randzonen | Aufdrückkraft (N) |
| | | | | | |
| Stabilisator 1 | 0,5 | unregelmäßig | 15 | gut | 1073 |
| Stabilisator 2 | 0,05 | unregelmäßig | 15 | gut | 561 |
| Stabilisator 3 | 0,18 | unregelmäßig | 10 | gut | 725 |
| Stabilisator 4 | 0,1 | unregelmäßig | 12 | gut | 671 |
| Vergleich 1 | 0,18 | unregelmäßig | 14 | gut | 1764 |

Besonders in dieser Formulierung zeigt sich bei den erfindungsgemäßen Substanzen eine interessante Balance zwischen ausreichender Stabilisierung einerseits (s. Vergleich 1, eingesetzt in der bei dieser Formulierung gerade ausreichend regulierenden Menge) und niedrigen Aufdrückkräften andererseits. Dabei reichen teilweise schon geringe Einsatzkonzentrationen für eine gute Randzonenregulierung aus. Andererseits erlaubt z. B. Stabilisator 1 die Verwendung in auch hoher Einsatzkonzentration, ohne zu einem starken Anstieg der Aufdrückwerte zu führen.

## Patentansprüche

1. Verwendung von Siliconpolyether-Copolymeren der allgemeinen Formel I 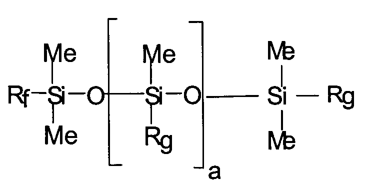 wobei
R_{f} einen Polyetherrest der durchschnittlichen Formel
- (Y)_{c}[O(cₓH₂ₓO)ₚZ]_{w}
bezeichnet, mit der Bedeutung
c = 0 oder 1,
x = 2 bis 4, wobei auch Mischungen der entsprechenden Monomeren verwendet werden können,
p ≥0,
w = 1 bis 4,
Z = ein Wasserstoffrest oder ein einwertiger organischer Rest,
Y = ein w+1-bindiger Kohlenwasserstoffrest, der auch verzweigt sein kann,
R_{g} ein Alkylrest mit 1 bis 10 Kohlenstoffatomen oder ein gegebenenfalls substituierter Arylrest ist,
wobei
a eine Zahl von 0 bis 20 ist,
mit der Maßgabe, daß nicht c und p zur gleichen Zeit 0 sein können,
als oberflächenaktive Substanzen bei der Herstellung von Polyurethanschäumen.

2. Verwendung der erfindungsgemäßen Substanzen gemäß Anspruch 1 mit a gleich einem Wert größer oder gleich 2 und kleiner oder gleich 8 als oberflächenaktive Substanz bei der Herstellung von Polyurethanschäumen.

3. Verwendung der erfindungsgemäßen Substanzen gemäß den Ansprüchen 1 und 2 in Kombinationen untereinander oder mit anderen organischen oder siliconhaltigen oberflächenaktiven Substanzen.
